# EUROPÄISCHE PATENTANMELDUNG

(11) **EP 1 050 491 A2**
(43) Veröffentlichungstag der Anmeldung: **08.11.2000**
(21) Anmeldenummer: 00105739.7
(22) Anmeldetag: 17.03.2000
(51) Int. Cl.: B65G 1/08

(54) **Vorrichtung zum Zurückhalten von entlang einer geneigten Rollenbahn, insbesondere der Rollenbahn eines Durchlaufregals, verfahrbaren Paletten**

(30) Priorität: 06.05.1999 DE 29908066 U
(71) Anmelder: NEDCON MAGAZIJNINRICHTING B.V., NL-7000 AA Doetinchem (NL)
(72) Erfinder: de Jong, L.-P., 7051 GN Varsseveld (NL)
(74) Vertreter: Stenger, Watzke & Ring Patentanwälte

(57) **Zusammenfassung**

Eine Vorrichtung zum Zurückhalten von entlang einer geneigten Rollenbahn, insbesondere der Rollenbahn eines Durchlaufregals, verfahrbaren Paletten ist mit einem in den Förderweg der Rollenbahn (1) hineinragenden Schaltelement (12) versehen, welches durch eine sich entlang des Förderweges bewegende Palette (2) betätigbar ist. Im Abstand von ca. einer Palettenlänge hinter dem Schaltelement (12) ist ein in den Förderweg einschwenkbares Rückhalteelement (7) angeordnet, ferner ist ein mechanisches Übertragungselement zwischen Schaltelement (12) und Rückhalteelement (7) vorgesehen. Um eine auch bei besonders leichten Paletten funktionssichere Vorrichtung zu schaffen, ist das Übertragungselement eine schwenkbar an der Rollenbahn (1) gelagerte, langgestreckte Wippe. Das vordere Ende (9) der Wippe ist über eine Führung (10, 11) mit dem Schaltelement (12) gekoppelt, an dem hinteren Ende (6) der Wippe (5) ist das Rückhalteelement (7) befestigt.

## Beschreibung

Die Erfindung betrifft eine Vorrichtung zum Zurückhalten von entlang einer geneigten Rollenbahn, insbesondere der Rollenbahn eines Durchlaufregals, verfahrbaren Paletten, mit einem in den Förderweg der Rollenbahn hineinragenden, durch eine sich entlang des Förderweges bewegende Palette selbst betätigbaren Schaltelement, einem im Abstand von ca. einer Palettenlänge hinter dem Schaltelement angeordneten und in den Förderweg einschwenkbaren Rückhalteelement sowie einem mechanischen Übertragungselement zwischen Schaltelement und Rückhalteelement.

Eine Vorrichtung dieser Art ist aus der DE 32 43 086 C1 bekannt. Sie dient dazu, in leicht geneigten Rollenbahnen von Paletten-Durchlaufregalen eine Trennung der vordersten, sich bereits in Entnahmestellung befindlichen Palette von der nachfolgenden Palette durchzuführen. Diese Trennung ist erforderlich, damit nicht bei der Entnahme der vordersten Palette zugleich die nachfolgende Palette an der vordersten Palette anliegt und deren Entnahme, beispielsweise mittels eines üblichen Fördergerätes, behindert.

Das Zurückhalten der nachfolgenden Palette erfolgt bei der bekannten Vorrichtung mittels eines in den Förderweg der Rollenbahn einschwenkbaren, hebelartigen Rückhalteelementes. Dieses ist mittels eines zwischengeschalteten Gestänges mit einer nahe der Entnahmestelle der Rollenbahn angeordneten Schaltklappe verbunden. Die Schaltklappe kann dem Gewicht einer darüber hinwegrollenden Palette nachgeben und betätigt hierdurch mittels des Gestänges einen unterhalb des Rückhalteelements angeordneten Spreizkeil. Durch Bewegung dieses Keiles wird eine Spreizwirkung ausgeübt, die zu einem Anheben des Rückhalteelementes in den Förderweg führt, worauf der Förderweg für die nachfolgende Palette blockiert ist. Von Nachteil bei der bekannten Vorrichtung ist, daß bei niedrigem Palettengewicht durch den Druck etwaiger nachfolgender Paletten eine das Rückhalteelement nach unten drückende Kraft entstehen kann, was mittels des zwischengeschalteten Gestänges zu einem Anheben der in der Entnahmestellung befindlichen, vordersten Palette führen kann, wodurch eine gefährliche Situation entsteht. In Verbindung mit leichtgewichtigen Paletten ist ferner von Nachteil, daß an der Schaltklappe eine relativ kräftig dimensionierte Zugfeder angreift, die bei der Konstruktion nach der DE 32 43 068 C1 dazu dient, die Schaltklappe nach dem Entnehmen der vordersten Palette wieder anzuheben und auf diese Weise das Rückhalteelement abzusenken, so daß die nachfolgende Palette anschließend automatisch in die Entnahmeposition vorrollen kann. Die von der Zugfeder auf die Schaltklappe ausgeübte Federkraft muß jedoch vom Gewicht der vorrollenden Palette überwunden werden, was bei schwergewichtigen Paletten keine Probleme bereitet, hingegen bei besonderes leichten Paletten zu Funktionsstörungen führen kann.

Der Erfindung liegt daher die **Aufgabe** zugrunde, eine Vorrichtung zum Zurückhalten von entlang einer geneigten Rollenbahn verfahrbaren Paletten zu schaffen, die auch bei besonderes leichten Paletten funktionssicher arbeitet.

Zur **Lösung** dieser Aufgabe wird bei einer Vorrichtung der eingangs genannten Art vorgeschlagen, daß das Übertragungselement eine schwenkbar an der Rollenbahn gelagerte, langgestreckte Wippe ist, deren vorderes Ende über eine Führung mit dem Schaltelement gekoppelt ist, und an deren hinterem Ende das Rückhalteelement befestigt ist.

Eine solche Vorrichtung arbeitet ohne Unterstützung durch eine Zug- oder Druckfeder. Beim Überfahren des Schaltelementes durch eine nachrollende Palette ist es daher nicht erforderlich, die Kraft einer Feder zu überwinden, weshalb die erfindungsgemäße Vorrichtung auch bei besonderes leichten Paletten funktionssicher arbeitet.

Zur Erzielung niedriger Betätigungskräfte ist ferner von Vorteil, wenn sich gemäß einer Weiterbildung der Vorrichtung der Drehpunkt der Wippe an oder nahe an deren Schwerpunkt befindet.

Mit einer weiteren Ausgestaltung der Erfindung wird vorgeschlagen, daß das Schaltelement als ein um eine an der Rollenbahn angeordnete Drehachse verschwenkbarer zweiarmiger Hebel ausgebildet ist, dessen erster Hebelarm mit einer in den Förderweg der Rollenbahn hineinragenden Schaltklappe versehen ist, und dessen zweiter Hebelarm über die Führung mit dem vorderen Ende der Wippe verbunden ist, wobei die Führung eine Langlochführung ist. Erzielt wird auf diese Weise eine besonders reibungsarme Bewegungskoppelung zwischen Schaltelement und Wippe. Vorzugsweise ist das Langloch der Langlochführung am vorderen Ende der Wippe ausgebildet, wobei das Schaltelement mit einem an dessen zweitem Hebelarm befestigten Querstift in das Langloch ragt.

Um die Betätigungskräfte bei der Vorrichtung gering zu halten, wird mit einer weiteren bevorzugten Ausgestaltung vorgeschlagen, daß in jener Stellung der Wippe, in der deren Rückhalteelement den Förderweg sperrt und die Schalklappe des Schaltelements den Förderweg vollständig freigibt, sich der zweite Hebelarm des Schaltelements im Wesentlichen rechtwinklig zu dem Langloch erstreckt. Durch diese Ausgestaltung wird erreicht, daß selbst starke, auf das Rückhalteelement einwirkende Kräfte es nicht vermögen, über die zwischengeschaltete Wippe die Stellung des Schaltelements bzw. der Schaltklappe zu beeinflussen.

Die Freigabe des Rückhalteelements zwecks Vorrollen der nächsten Palette wird nicht automatisch ausgelöst, sondern unterliegt vorzugsweise einem Bedienvorgang. Hierzu kann das Schaltelement mit einer Betätigungsplatte versehen sein, die für eine Bedienperson vorzugsweise mit dem Fuß erreichbar ist. Gemäß einer bevorzugten Ausgestaltung befindet sich die Betätigungsplatte auf demselben Hebelarm des Schaltelements, wie die Schaltklappe.

Weitere Einzelheiten und Vorteile des Gegenstandes der Erfindung ergeben sich aus der nachfolgenden Beschreibung der zugehörigen Zeichnung. Darin zeigen:
- Fig. 1: in einer Seitenansicht eine Rollenbahn mit einer erfindungsgemäßen Vorrichtung zum Zurückhalten von entlang der geneigten Rollenbahn verfahrbaren Paletten;
- Fig. 2: die Vorrichtung nach Fig. 1 kurz nach Betätigung des Schaltelements durch eine Bedienperson;
- Fig. 3: die Vorrichtung nach Fig. 1 zu jenem Zeitpunkt, zu dem eine vorrollende Palette das Schaltelement in seine ursprüngliche Stellung zurückschwenkt und
- Fig. 4: die Vorrichtung nach Fig. 1 zu einem wiederum späteren Zeitpunkt, zu dem die vorrollende Palette vollständig in die Entnahmeposition gelangt ist.

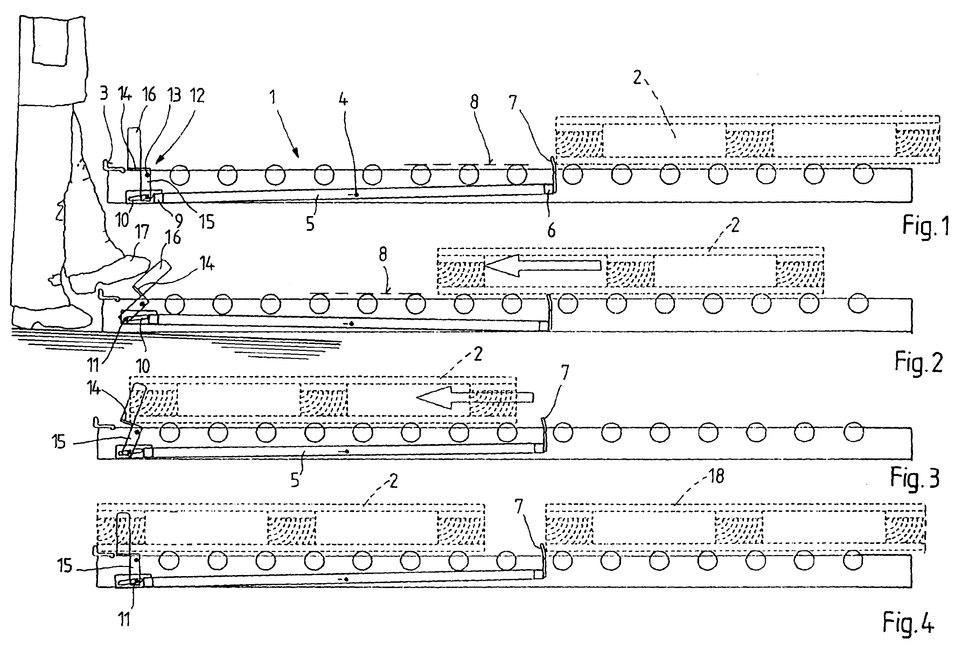

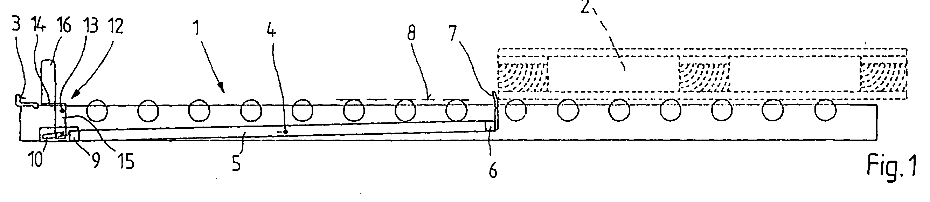

Die Fign. 1 bis 4 zeigen ein- und dieselbe Rollenbahn 1 eines Durchlaufregals zu verschiedenen Zeitpunkten. Auf der Rollenbahn 1 werden Paletten 2 transportiert, wozu die Rollenbahn 1 leicht zur Entnahmeseite hin abfallend geneigt ist, so daß die Paletten selbsttätig zu dem Entnahmeende hin rollen. Die jeweils erste, sich in der Entnahmeposition befindende Palette kann dort mittels üblicher Fördergeräte angehoben und herausgezogen werden. Dazu muß ein am Entnahmeende der Rollenbahn befestigter Anschlag 3 überwunden werden. Ferner ist sicherzustellen, daß die nachfolgende, sich in einer Vorratsstellung befindende Palette solange zurückgehalten wird, bis die vorderste Palette die Rollenbahn sicher verlassen hat.

Die auf den Fign. 1 bis 4 dargestellte Vorrichtung ist so ausgelegt, daß eine nachfolgende, sich in Vorratsstellung befindenden Palette solange nicht nachrollen kann, wie sich noch eine Palette an der Entnahmestelle befindet. Hierzu ist in der Rollenbahn 1 auf einer Achse 4 eine Wippe 5 schwenkbar gelagert, die an ihrem hinteren Ende 6 mit einem als Stopper dienenden Rückhalteelement 7 versehen ist. Bei der Wippe 5 handelt es sich vorzugsweise um eine Stange oder ein Rohr, an deren hinterem Ende das Rückhalteelement 7 etwa durch Aufstecken befestigt ist. Die Achse 4 der Wippe 5 befindet sich in etwa in der Mitte der Wippe. Nimmt die Wippe die in den Fign. 1 und 4 erkennbare Stellung ein, so erstreckt sich das Rückhalteelement 7 bis in den Förderweg hinein. Eine dahinter angeordnete Palette 2 wird daher an ihrer vorderen Unterkante zurückgehalten.

Nimmt die Wippe 5 hingegen ihre andere Endstellung an, wie dies in Fig. 2 dargestellt ist, so befindet sich das Rückhalteelement 7 unterhalb der Förderebene 8 und außerhalb des Förderweges, so daß, wie Fig. 2 ebenfalls erkennen läßt, die Palette 2 über das Rückhalteelement 7 hinwegrollen kann.

Die Stange der Wippe 5 ist an ihrem vorderen Ende 9 mit einem Langloch 10 versehen, in das ein Querstift 11 eines Schaltelements 12 eingreift. Bei dem Schaltelement 12 handelt es sich um einen zweiarmigen Hebel, der um eine in der Rollenbahn 1 angeordnete Drehachse 13 verschwenkbar ist. Der erste Hebelarm des Schaltelements 12 befindet sich oberhalb der Drehachse 13 und bildet eine Schaltklappe 14.

In der Stellung nach den Fign. 1 und 4 befindet sich die Schaltklappe 14 unterhalb der Förderebene 8 der Rollenbahn. Hierbei erstreckt sich der zweite Hebelarm 15 des Schaltelements 12 nahezu senkrecht nach unten.

In der Stellung nach den Fign. 2 und 3 hingegen ist das Schaltelement verschwenkt, wodurch sich dessen Schaltklappe 14 zumindest teilweise über die Förderebene 8 erhebt und in den Förderweg hineinragt. Hierbei erstreckt sich, wie die Fign. 2 und 3 erkennen lassen, der zweite Arm 15 des Schaltelements 12 schräg nach unten, wobei nach wie vor der Querstift 11 des Schaltelements 12 in das Langloch 10 am vorderen Ende der Wippe 5 hineinragt. Jedoch wird bei Schrägstellung des Schaltelements 12 die Wippe 5 an ihrem vorderen Ende 9 geringfügig angehoben, wodurch sich das hintere Ende der Wippe absenkt, und sich das Rückhalteelement 7 außerhalb des Förderweges befindet.

Zu dem Schaltelement 12 gehört ferner eine Betätigungsplatte 16, die für eine Bedienperson vorzugsweise mit dem Fuß 17 erreichbar ist. Die Betätigungsplatte 16 befindet sich auf demselben Hebelarm des Schaltelements 12, wie die Schaltklappe 14. Anders als die Schaltklappe 14 jedoch ragt die Betätigungsplatte 16 nicht unmittelbar in den Weg, den die Palette 2 auf der Rollenbahn 1 nimmt. Vorzugsweise befindet sich die Betätigungsplatte 16 seitlich neben der Rollenbahn, oder jedoch in Laufrichtung zwischen den Kufen der Palette.

Insbesondere die Fign. 1 und 4 lassen erkennen, daß die geometrischen Verhältnisse des zweiten Hebelarms 15 des Schaltelements 12 einerseits und des Langlochs 10 andererseits so aufeinander abgestimmt sind, daß in jener Stellung der Wippe 5, in der das Rückhalteelement 7 den Förderweg sperrt, sich der zweite Hebelarm 15 im Wesentlichen rechtwinklig zu dem Langloch 10 erstreckt. Auf diese Weise kann auch bei hohem Gewicht der nachfolgenden Paletten keine Bewegungsumkehr stattfinden, indem also durch Herunterdrücken des Rückhalteelements 7 auf dem Weg über die Wippe 5 das Schaltelement 12 unfreiwillig aus der in Fig. 1 dargestellten Stellung in die in Fig. 2 dargestellte Stellung überführt wird. Zu dem Zeitpunkt nach Fig. 1 befindet sich nur in der Vorratsposition eine Palette, wohingegen die Entnahmeposition frei ist, etwa weil eine dort vorher befindliche Palette bereits entnommen wurde. Ein Nachrücken der in Vorratsstellung befindlichen Palette erfolgt jedoch nicht automatisch, sondern muß durch eine Bedienperson ausgelöst werden. Dieser Zeitpunkt ist in Fig. 2 dargestellt. Mit dem Fuß 17 wird die Betätigungsplatte 16 des Schaltelements 12 verschwenkt, was mittels der Koppelung zwischen dem zweiten Hebelarm 15 des Schaltelements 12 und der Wippe 5 zu einem Verschwenken der Wippe 5 und damit zum Absenken des Rückhalteelements 7 führt. Die nachfolgende Palette 2 rollt nach vorne und gelangt auf diese Weise zunehmend in die Entnahmestellung,

Fig. 3 zeigt die Vorrichtung zu jenem Zeitpunkt, an dem die nachrückende Palette 2 nahezu die Entnahmestellung erreicht hat. Mit ihrer nach vorne weisenden Unterkante stößt die Palette 2 gegen die in den Förderweg hineinragende Schaltklappe 14 und schwenkt diese in ihre Anfangsposition zurück. Dies führt, wiederum über die zwischengeschaltete Wippe 5, zu einem erneuten Einschwenken des Rückhalteelements 7 in den Förderweg, so daß eine weitere, nachfolgende Palette 18 wiederum zurückgehalten wird. Dieser Zeitpunkt ist in Fig. 4 dargestellt.

Die beschriebene Vorrichtung arbeitet mit sehr geringen mechanischen Widerständen und kommt auch ohne zu überwindende Federkräfte aus. Das in Fig. 2 dargestellte Zurückschwenken des Schaltelements 12 durch die darüber hinwegrollende Palette 2 erfolgt nahezu widerstandslos, so daß auch bei Verwendung besonderes leichter Paletten ein hohes Maß an Funktionssicherheit erzielt wird.

### Bezugzeichenliste

- 1: Rollenbahn
- 2: Palette
- 3: Anschlag
- 4: Achse
- 5: Wippe
- 6: hinteres Ende der Wippe
- 7: Rückhalteelement
- 8: Förderebene
- 9: vorderes Ende der Wippe
- 10: Langloch
- 11: Querstift
- 12: Schaltelement
- 13: Drehachse
- 14: Schaltklappe
- 15: zweiter Hebelarm
- 16: Betätigungsplatte
- 17: Fuß der Bedienperson
- 18: nachfolgende Palette

## Patentansprüche

1. Vorrichtung zum Zurückhalten von entlang einer geneigten Rollenbahn, insbesondere der Rollenbahn eines Durchlaufregals, verfahrbaren Paletten, mit einem in den Förderweg der Rollenbahn (1) hineinragenden, durch eine sich entlang des Förderweges bewegende Palette (2) selbst betätigbaren Schaltelement (12), einem im Abstand von ca. einer Palettenlänge hinter dem Schaltelement (12) angeordneten und in den Förderweg einschwenkbaren Rückhalteelement (7) sowie einem mechanischen Übertragungselement zwischen Schaltelement (12) und Rückhaltelement (7),
**dadurch gekennzeichnet,**
daß das Ubertragungselement eine schwenkbar an der Rollenbahn (1) gelagerte, langgestreckte Wippe (5) ist, deren vorderes Ende (9) über eine Führung (10, 11) mit dem Schaltelement (12) gekoppelt ist, und an deren hinterem Ende (6) das Rückhalteelement (7) befestigt ist.

2. Vorrichtung nach Anspruch 1, dadurch gekennzeichnet, daß sich die Achse (4) der Wippe (5) an oder nahe an deren Schwerpunkt befindet.

3. Vorrichtung nach Anspruch 1 oder Anspruch 2, dadurch gekennzeichnet, daß das Schaltelement (12) als ein um eine an der Rollenbahn (1) angeordnete Drehachse (13) verschwenkbarer, zweiarmiger Hebel ausgebildet ist, dessen erster Hebelarm mit einer in den Förderweg der Rollenbahn hineinragenden Schaltklappe (14) versehen ist, und dessen zweiter Hebelarm (15) über die Führung (10, 11) mit dem vorderen Ende der Wippe (5) verbunden ist, wobei die Führung (10, 11) eine Langlochführung ist.

4. Vorrichtung nach Anspruch 3, dadurch gekennzeichnet, daß das Langloch (10) der Langlochführung am vorderen Ende (9) der Wippe (5) ausgebildet ist, und daß das Schaltelement (12) mit einem an dessen zweitem Hebelarm (15) befestigten Querstift (11) in das Langloch (10) hineinragt.

5. Vorrichtung nach Anspruch 4, dadurch gekennzeichnet, daß in jener Stellung der Wippe (5), in der deren Rückhalteelement (7) den Förderweg sperrt und die Schaltklappe (14) des Schaltelements (12) den Förderweg vollständig freigibt, sich der zweite Hebelarm (15) des Schaltelements (12) im wesentlichen rechtwinklig zu dem Langloch (10) erstreckt.

6. Vorrichtung nach einem der Ansprüche 1 bis 5, dadurch gekennzeichnet, daß das Schaltelement (12) mit einer Betätigungsplatte (16) versehen ist, die für eine Bedienperson vorzugsweise mit dem Fuß (17) erreichbar ist.

7. Vorrichtung nach Anspruch 6, dadurch gekennzeichnet, daß sich die Betätigungsplatte (16) auf demselben Hebelarm des Schaltelements (12) befindet, wie die Schaltklappe (14).
